# EUROPÄISCHE PATENTSCHRIFT

(11) **EP 0 708 260 B1**
(45) Veröffentlichungstag und Bekanntmachung des Hinweises auf die Patenterteilung: **26.11.1997**
(21) Anmeldenummer: 95115618.1
(22) Anmeldetag: 04.10.1995
(51) Int. Cl.: F16B 35/06, F16B 23/00

(54) **Befestigungs- und Verbindungsmittel**
Fastening and joining means
Matériel de fixation et de raccordement

(30) Priorität: 20.10.1994 DE 9416930 U
(43) Veröffentlichungstag der Anmeldung: 24.04.1996
(73) Patentinhaber: bulthaup GmbH & Co. Küchensysteme, D-84153 Aich (DE)
(72) Erfinder: Langer, Otto, D-84494 Neumarkt-St. Veit (DE); Haberl, Thomas, D-85356 Freising-Attaching (DE); Neumann, René, D-84149 Eberspoint (DE)
(74) Vertreter: May, Hans Ulrich, Dr.

(56) Entgegenhaltungen:
- EP-A- 0 447 902
- WO-A-91/07599

## Beschreibung

Die Erfindung betrifft Befestigungs- und Verbindungsmittel in Form eines Stiftes oder einer Hülse mit Gewinde und mit einem breiteren Kopf, der eine Kupplungsvorrichtung aufweist, die mit einem zu ihr komplementären Teil eines Drehwerkzeugs in Eingriff kommen kann, wobei der Kopf einen Randbereich mit einer Dicke zwischen zwei zur Achse des Stiftes oder der Hülse senkrechten Ebenen aufweist und die mit dem komplementären Teil des Drehwerkzeugs zusammenwirkende Kupplungsvorrichtung an der Oberseite des Kopfes und in dessen Innenbereich ausgebildet ist.

Derartige Befestigungsmittel sind beispielsweise Schrauben, Schraubhülsen, oder Schraubbolzen, die besonders bei Möbeln zur Verbindung von Teilen des Korpus, von Schubkästen oder zur Befestigung von Griffen dienen.

Ein Befestigungs- und Verbindungsmittel gemäß dem Oberbegriff des Anspruchs 1 ist aus der EP-A-0 447 902 bekannt, die eine Schraube zum Befestigen von Gipskarton platten beschreibt.

Übliche Schrauben, besonders Griffschrauben dieser Art haben meist einen nach außen gewölbten linsenförmigen Schraubenkopf von etwa 2 bis 3 mm Dicke.

Um die Schraube eindrehen zu können, befinden sich im Kopf Schlitze, wie Kreuzschlitz, einfacher Schlitz oder Vielzahn, Innensechskant u.s.w., die hier allgemein als Kupplungsvorrichtung bezeichnet werden. Die Schraube oder Schraubhülse wird dann mit Hilfe eines Drehwerkzeugs, nämlich einem Schraubendreher mit einer zur Kupplungsvorrichtung komplementären Spitze in den zu befestigenden oder zu verbindenden Teil eingedreht.

Bei den bekannten Schraubenköpfen bildet sich durch die Krafteinwirkung der Schraubendreherklinge an den Schlitzen Grate, die zu Verletzungen oder Beschädigungen von Gegenständen führen können.

Wenn eine übliche Griffschraube mit nach außen gewölbtem Schraubenkopf zur Befestigung eines Griffes an einem Schubkasten verwendet wird und der Schraubenkopf zum Inneren des Schubkastens vorsteht, bringt das den weiteren Nachteil mit sich, daß paßgenaue Einsätze für einen solchen Schubkasten, z.B. Besteckeinsätze, im Bereich der Griffstangen ausgefräst werden müssen, was zusätzlichen Arbeitsaufwand und Kosten verursacht, oder es müssen die Vorbohrungen des Schubkastens, welche die Griffschrauben aufnehmen sollen, innenseitig mit größerem Durchmesser hergestellt werden, wodurch zwar der Schraubenkopf versenkt werden kann, jedoch scharfkantige und womöglich unregelmäßige Bohrlochränder sichtbar bleiben und ihre Grate auch zu Verletzungen oder zu Beschädigungen von Gegenständen führen können.

Der Erfindung liegt nun die Aufgabe zugrunde, die üblichen Befestigungs- und Verbindungsmittel in Form eines Stiftes oder einer Hülse mit Gewinde so weiterzubilden, daß bei ihrer Verwendung entstandene Grate an ihrer Kupplungsvorrichtung (Schlitz oder dergleichen) sich nach außen nicht störend bemerkbar machen und außerdem eine gute Abdeckung der Ränder des vorgebohrten, das Befestigungs- und Verbindungsmittel aufnehmenden Lochs erreicht wird.

Diese Aufgabe wird dadurch gelöst, daß bei einem Befestigungs- und Verbindungsmittel der eingangs angegebenen Art der Innenbereich gegenüber der zur Stiftachse senkrechten Ebene, welche die Oberseite des Randbereichs berührt oder enthält, zurückgesetzt ist.

Bevorzugte Ausführungsformen sind in den Unteransprüchen angegeben.

Das erfindungsgemäße Befestigungs- und Verbindungsmittel, im folgenden kurz als Universalschraube bezeichnet, weist gegenüber den bekannten Schrauben folgende wesentliche Merkmale auf:
1.Der Schraubenkopf hat eine konkave Wölbung oder stufig ausgebildete Vertiefung nach innen, in der sich die Schlitze befinden. Die durch die Schraubendreherklinge entstandenen Grate stehen nicht mehr über das Niveau des Schraubenkopfes vor.
2. Verletzungen oder Beschädigung von Gegenständen, z.B. bei der Entnahme von Einsätzen aus einem Schubkasten, sind ausgeschlossen.
3. Der Schraubenkopf ist flach, beinahe flächenbündig auf den Möbelfronten, was eine optische Verbesserung ist, zumal auch der Schraubenkopf selbst optisch ansprechender ist als übliche linsen- oder kalottenförmige Schraubenköpfe.
4. Die erfindungsgemäße Schraubenkopfform ist für die verschiedensten Schraubenarten verwendbar: Korpusverbindungsschrauben, Befestigungsschrauben für Wangen und dergleichen, wobei sich außer den angegebenen technischen Vorteilen auch der Vorteil eines einheitlichen Designs ergibt.
5. Der erfindungsgemäße Schraubenkopf verdeckt die Ränder von Bohrungen in Holzwerkstoffen, die oft ausgerissen sind und steht nur geringfügig über die Auflagefläche vor, falls bei entsprechender Nachgiebigkeit der Anschlagfläche nicht sogar ein bündiges Versenken beim Eindrehen möglich ist. Die erfindungsgemäßen Schraubenköpfe verdecken also in jedem Fall die Bohrränder, was mit den bekannten Senkkopfschrauben nicht möglich ist.
6. Die erfindungsgemäßen Universalschrauben können statt mit einer flachen Einwölbung oder an eine solche anschließend auch stufenförmig nach innen vertieft sein.
7. Statt Schlitzen kann der Schraubenkopf zum Eindrehen auch mit Inbus oder Vielzahn als Kupplungsvorrichtung versehen sein.
8. Schließlich können die erfindungsgemäßen Universalschrauben beliebige Längen und Durchmesser haben und mit metrischen Gewinden oder Holzgewinden u.s.w. versehen sein und auch als Schraubhülsen ausgebildet sein.
9. Die erfindungsgemäßen Befestigungs- und Verbindungsmittel (Universalschrauben) lassen sich in üblicher Weise auf Fertigungsautomaten herstellen und mit einem üblichen Oberflächenschutz versehen.

Die Erfindung wird weiter erläutert durch die folgende Beschreibung von Ausführungsbeispielen, die sich auf die beigefügte Zeichnung beziehen. Hierin zeigen:
- Fig.1: eine Seitenansicht einer erfindungsgemäßen Holzschraube, wobei die rechte Hälfte des Kopfes im Schnitt längs Y-Y der Fig. 2 gezeigt ist;
- Fig.2: eine Draufsicht der Holzschraube der Fig.1;
- Fig.3: eine Seitenansicht einer erfindungsgemäßen Schraube mit Metallgewinde;
- Fig.4: eine erfindungsgemäße Schraubhülse;
- Fig.5: einen Schnitt längs I-I der Fig.4.

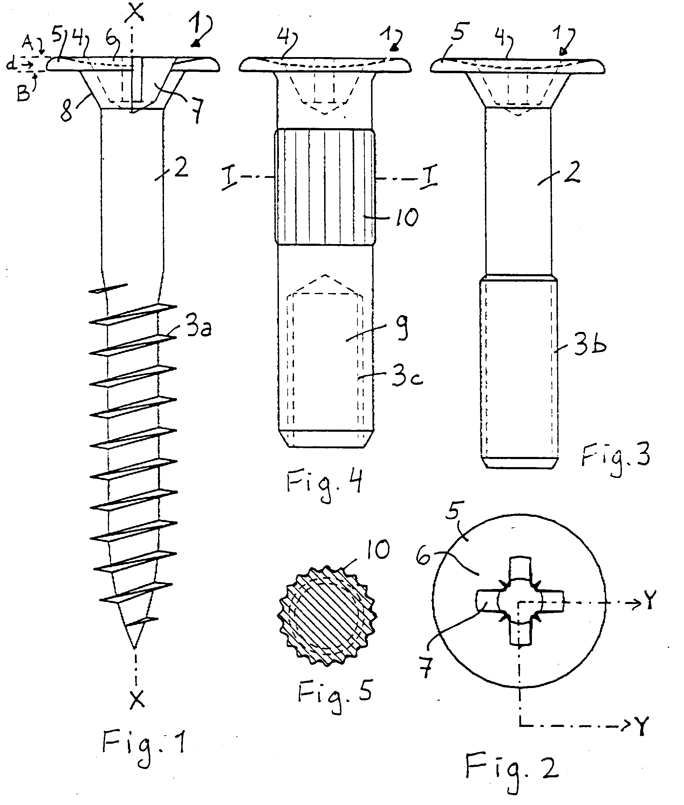

Das in Fig.1 gezeigte erfindungsgemäße Befestigungs- und Verbindungsmittel 1 ist eine Holzschraube mit einem Schaft 2, von z.B. 3 - 4 mm Durchmesser, einem Gewinde 3a und einem Kopf 4, der gegenüber dem Schaft 2 breiter mit z.B. 9 mm Durchmesser ausgebildet ist. Der Kopf 4 hat einen Randbereich 5 mit einer möglichst geringen Dicke d von z.B. 0,5 - 1 mm zwischen zwei zur Schraubenachse XX senkrechten Ebenen A und B und dieser Randbereich 5 ist an der Oberseite zum Innenbereich 6 mit einer flachen Wölbung ohne Übergänge oder mit einem oder mehreren stufenförmigen Absätzen (nicht gezeigt), die an den gewölbten oder ebenen (nicht gezeigt) Randbereich anschließen, vertieft. In der Mitte des Innenbereichs 6 ist ein Kreuzschlitz 7 ausgebildet (Fig.2), der sich im Kopf in Richtung auf die Schraubenspitze erstreckt. Bei der Schraube der Fig.1 ist der Schraubenkopf 4 von der Unterseite seines Randbereichs 5 in Richtung auf den Schraubenhals 2 konisch verjüngt, so daß der Kreuzschlitz im Kopf so geformt werden kann, daß eine hinreichende Wandstärke auch im Bereich der Schlitze verbleibt.

Diese Schraube läßt sich auf üblichen Automaten herstellen. Ihr Kopf ist auf seiner Oberseite glatt mit ansprechendem Äußeren.

Die Innenwölbung des Kopfes und/oder der Außenkonus können auch abgestuft ausgebildet sein.

Die in Fig.3 gezeigte Schraube entspricht der Schraube der Fig.1, wobei nur das Gewinde als Metallgewinde 3b ausgebildet ist.

Das in Fig.4 und 5 gezeigte Befestigungs- und Verbindungsmittel ist ein Schraubbolzen mit einer Blindbohrung 9, die mit einem Innengewinde 3c und wie üblich mit einem mit Riffeln 10 ausgebildeten Abschnitt unterhalb des Kopfes versehen ist. In diesem Fall erstreckt sich die Kupplungsvorrichtung 7 in den unterhalb des Kopfes 4 praktisch ohne Verjüngung ausgebildeten massiven Schaft der Schraubhülse, in welche z.B. die Schraube der Fig 3 eingeschraubt werden kann, um zwei Korpusteile zu verbinden Die Riffelung 10 verhindert ein Drehen der Schraubhülse in einer Vorbohrung des Korpus oder dgl..

## Patentansprüche

1. Befestigungs- und Verbindungsmittel (1) in Form eines Stiftes oder einer Hülse (2) mit Gewinde (3) und mit einem breiteren Kopf (4), der eine Kupplungsvorrichtung (7) aufweist, die mit einem zu ihr komplementären Teil eines Drehwerkzeugs in Eingriff kommen kann, wobei der Kopf (4) einen Randbereich (5) mit einer Dicke (d) zwischen zwei zur Achse des Stiftes oder der Hülse (2) senkrechten Ebenen (A, B) aufweist und die mit dem komplementären Teil des Drehwerkzeugs zusammenwirkende Kupplungsvorrichtung (7) an der Oberseite des Kopfes (4) und in dessen Innenbereich (6) ausgebildet ist, **dadurch gekennzeichnet,** daß der Innenbereich (6) gegenüber der zur Stiftachse (XX) senkrechten Ebene (A), welche die Oberseite des Randbereichs (5) berührt oder enthält, zurückgesetzt ist.

2. Befestigungs- und Verbindungsmittel nach Anspruch 1 in Form einer Schraube oder Schraubhülse, **dadurch gekennzeichnet,** daß die Kupplungsvorrichtung (7) sich vom Innenbereich (6) des Kopfes (4) in den an den Kopf (4) anschließenden massiven Teil der Schraube oder Schraubhülse erstreckt.

3. Befestigungs- und Verbindungsmittel nach Anspruch 1 oder 2 in Form einer Schraube oder Schraubhülse, **dadurch gekennzeichnet,** daß der Kopf (4) von der Unterseite seines Randbereichs (5) in Richtung auf die Spitze der Schraube oder Schraubhülse konisch oder abgestuft verjüngt ausgebildet ist, und die Kupplungsvorrichtung (7) sich vom Innenbereich (6) in den Konus oder die Abstufung (8) erstreckt.

4. Befestigungs- und Verbindungsmittel nach einem der Ansprüche 1 bis 3, **dadurch gekennzeichnet,** daß die Kupplungsvorrichtung (7) ein Schraubenschlitz oder Kreuzschlitz ist.

5. Befestigungs- und Verbindungsmittel nach einem der Ansprüche 1 bis 3, **dadurch gekennzeichnet,** daß die Kupplungsvorrichtung (7) ein Innenmehrkant ist.

6. Befestigungs- und Verbindungsmittel nach einem der Ansprüche 1 bis 3, **dadurch gekennzeichnet,** daß die Kupplungsvorrichtung (7) ein Vielzack ist.

7. Befestigungs- und Verbindungsmittel nach einem der Ansprüche 1 bis 6, **dadurch gekennzeichnet,** daß die obere Fläche des Randbereichs (5) vom Innenbereich (6) zur äußeren Oberkante des Randbereichs (5) gewölbt verläuft.

8. Befestigungs- und Verbindungsmittel nach einem der Ansprüche 1 bis 6, **dadurch gekennzeichnet,** daß der Innenbereich (6) mit wenigstens einer Stufe in Richtung auf die Spitze der Schraube oder der Hülse abgesetzt ist.

9. Befestigungs- und Verbindungsmittel nach einem der Ansprüche 1 bis 8 in Form einer Schraube mit Holz- oder Metallgewinde (3a,3b)

10. Befestigungs- und Verbindungsmittel nach einem der Ansprüche 1 bis 8 in Form eines Bolzens mit axialer Blindbohrung (9) mit Innengewinde (3c).

11. Befestigungs- und Verbindungsmittel nach einem der Ansprüche 1 bis 10, dadurch gekennzeichnet, daß die Dicke (d) möglichst gering und kleiner als 1 mm ist.

## Claims

1. A means of connection or attachment (1) in the form of a pin or a sleeve (2) with a thread (3) and a wide head (4), having a means of coupling (7) which may operate in conjunction with a complementary part of a turning tool, wherein the head (4) has a rim area (5) of thickness (d) between two planes (A, B) which are perpendicular to the axis of the pin or sleeve (2), and which comprises the means (7) of coupling with the complementary part of the turning tool on the upper surface of the head (4) and in the inner region (6) thereof, characterised in that the inner region (6) is recessed in relation to the plane (A) which is perpendicular to the axis (XX) of the pin, which borders on, or contains, the upper surface of the rim region.

2. A means of connection or attachment according to claim 1 in the form of a screw or a screw sleeve, characterised in that the means of coupling (7) extends from the inner region (6) of the head (4) into the massive region attached to the head (4) of the screw or threaded sleeve.

3. A means of connection or attachment according to claim 1 in the form of a screw or screw sleeve, characterised in that the head (4) is conically-shaped or tapered in graduations from the lower side of the rim area (5) in the direction of the point of the screw or screw sleeve, and that the means of coupling (7) reaches into the cone or gradation (8).

4. A means of connection or attachment according to one of claims 1 to 3, characterised in that the means of coupling (7) is a screw slot or cross-head slot.

5. A means of connection or attachment according to one of claims 1 to 3, characterised in that the means of coupling (7) has a plurality of interior edges.

6. A means of connection or attachment according to one of claims 1 to 3, characterised in that the means of coupling is multiply-slotted.

7. A means of connection or attachment according to one of claims 1 to 6, characterised in that the upper surface of the rim area (5) is bulged from the inner region (6) to the outer upper edge of the rim area (5).

8. A means of connection or attachment according to one of claims 1 to 6, characterised in that the inner region (6) is offset by at least one gradation in the direction of the point of the screw or the sleeve.

9. A means of connection or attachment according to one of claims 1 to 8, in the form of a screw with a wooden or metal thread (3a, 3b).

10. A means of connection or attachment according to one of claims 1 to 8, in the form of a bolt with an axial blind hole (9) with an interior thread (3c).

11. A means of connection or attachment according to one of claims 1 to 10, characterised in that the thickness (d) is as small as possible and is smaller than 1 mm.

## Revendications

1. Matériel de fixation et de raccordement (1) sous forme de broche ou de douille (2) avec filetage (3) et avec une tête plus large (4) qui présente un dispositif d'accouplement (7) qui peut être mis en prise avec une pièce d'un outil de tournage, pièce qui lui est complémentaire, la tête (4) présentant une zone marginale (5) avec une épaisseur (d) entre deux plans perpendiculaires à l'axe de la broche ou de la douille (2) et le dispositif d'accouplement (7) concourant avec la pièce complémentaire de l'outil de tournage étant conçu sur la face supérieure de la tête (4) et dans sa zone intérieure (6), caractérisé en ce que la zone intérieure (6) est en retrait par rapport au plan (A) perpendiculaire à l'axe de la broche (XX), plan qui touche ou renferme la face supérieure de la zone marginale (5).

2. Matériel de fixation et de raccordement selon la revendication 1, sous forme de vis ou de douille à vis, caractérisé en ce que le dispositif d'accouplement (7) s'étend de la zone intérieure (6) de la tête (4) dans la partie pleine de la vis ou de la douille à vis, partie raccordant à la tête (4).

3. Matériel de fixation et de raccordement selon les revendications 1 ou 2, sous forme de vis ou de douille à vis, caractérisé en ce que la tête (4) est conçue de façon conique ou graduellement effilée depuis la face inférieure de sa zone marginale (5) en direction de la pointe de la vis ou de la douille à vis, et en ce que le dispositif d'accouplement (7) s'étend de la zone intérieure (6) dans le cône ou la gradation (8).

4. Matériel de fixation et de raccordement selon l'une des revendications 1 à 3, caractérisé en ce que le dispositif d'accouplement (7) est une fente de serrage ou une empreinte cruciforme.

5. Matériel de fixation et de raccordement selon l'une des revendications 1 à 3, caractérisé en ce que le dispositif d'accouplement (7) a plusieurs pans creux.

6. Matériel de fixation et de raccordement selon l'une des revendications 1 à 3, caractérisé en ce que le dispositif d'accouplement (7) est un polygone.

7. Matériel de fixation et de raccordement selon l'une des revendications 1 à 6, caractérisé en ce que la surface supérieure de la zone marginale (5) est bombée depuis la zone intérieure (6) jusqu'au bord supérieur extérieur de la zone marginale (5).

8. Matériel de fixation et de raccordement selon l'une des revendications 1 à 6, caractérisé en ce que la zone intérieure (6) est décalée d'au moins un degré en direction de la pointe de la vis ou de la douille.

9. Matériel de fixation et de raccordement selon l'une des revendications 1 à 8, sous forme de vis avec filetage à bois ou métallique (3a, 3b).

10. Matériel de fixation et de raccordement selon l'une des revendications 1 à 8, sous forme d'un boulon avec alésage axial aveugle (9) avec taraudage (3c).

11. Matériel de fixation et de raccordement selon l'une des revendications 1 à 10, caractérisé en ce que l'épaisseur (d) est autant que possible faible et inférieure à 1 mm.
